Europäisches Patentamt

European Patent Office

Office européen des brevets

(11) Publication number: **0 202 379**
A2

# (12) EUROPEAN PATENT APPLICATION

(21) Application number: **85306925.0**

(22) Date of filing: **27.09.85**

(51) Int. Cl.⁴: **B 29 C 67/22**
B 29 B 11/02, B 29 B 11/14
//B29K79:00, B29K105:04

(30) Priority: **20.05.85 US 736241**

(43) Date of publication of application:
**26.11.86 Bulletin 86/48**

(84) Designated Contracting States:
**AT BE CH DE FR GB IT LI LU NL SE**

(71) Applicant: **Gagliani, John**
**6280 Lance Place**
**San Diego California 92120(US)**

(71) Applicant: **Long, John V.**
**1756 E. Lexington Avenue**
**El Cajon California 92021(US)**

(72) Inventor: **Gagliani, John**
**6280 Lance Place**
**San Diego California 92120(US)**

(72) Inventor: **Long, John V.**
**1756 E. Lexington Avenue**
**El Cajon California 92021(US)**

(74) Representative: **Spencer, Graham Easdale et al,**
**A.A. Thornton & CO Northumberland House 303-306,**
**High Holborn**
**London WC1V 7LE(GB)**

(54) **Method of shaping polyimide foam sheets.**

(57) A method of shaping polyimide foam sheets comprises:

(a) placing an uncured polyimide foam sheet into a two part mould adapted to provide the desired shape,

(b) closing the mould and heating at least one of the moulding surfaces so that the contiguous surface of the foam sheet is heated to a temperature of from 220 to 320°C, and

(c) opening the mould and removing the shaped foam sheet,

the temperature and time of heating in step (b) being such that in the shaped sheet the heated surface is provided with a higher density, moisture impervious, fire blocking and abrasion resistant skin.

- 1 -

## Method of shaping polyimide foam sheets

The present invention is concerned with a method of shaping polyimide foam sheets to give self-supporting structures having desired shapes.

Polyimide and modified polyimide foams can be made by a number of different processes. Typical processes are described in U.S. Patents 4315076, 4361453, and 4407254 and in European Patent Applications 85302657.3 and 85303940.2.

The polyimide and modified polyimide foams disclosed in these patents and applications are typically prepared by reacting a tetracarboxylic acid dianhydride with a lactam in a suitable solvent and mixing the resulting product solution with a diamine. The solution of polyimide precursor mixture obtained is dried and the dry mixture is heated to form a block of polyimide foam. The block is then cut into sheets of polyimide foam of the required thickness for use in the process of the present invention.

In some cases it is possible to prepare a polyimide foam sheet of the desired sheet thickness directly in a suitable mould. However, in most cases the resulting sheet has an excessively irregular upper surface, so that it is usually preferred to slice sheets from a larger block in order to obtain highly uniform sheets of the desired thickness.

Polyimide foam sheets have a large number of applications which take advantage of their flexibility and flame resistance, such as seat cushions in aircraft. Other applications requiring flame resistance and negligible emission of toxic gases when exposed to a naked flame, such as the insulation of air ducts in aircraft, spacecraft, naval ships, etc., require polyimide foam sheets in a variety of shapes and configurations. Simply wrapping ducts with sheets of polyimide foam is often unsatisfactory since the elastic characteristics of the sheets cause them to come loose and they are also difficult to bend around sharp corners. Such sheets are also not adaptable to demands for varying thicknesses, are often permeable to moisture, and have low surface strength.

Attempts have been made to foam the polyimide in a mould adapted to provide the desired shape, such as a U-shaped channel suitable for insulating a half-pipe. However, the structures obtained by this method are of greatly varying density and show poor mould filling, especially when moulds having relatively thin areas are used. Structures produced by this method have local weak areas and do not retain their final shapes well. It is therefore very difficult to obtain a particular density and strength uniformity (or selected density and strength gradients) in structures made by this method.

Thus there is a need for an improved method of preparing shaped polyimide foam sheets, particularly with regard to the uniformity of density and strength in the final structure.

We have now developed a method of preparing strong, self-supporting shaped polyimide foam structures having substantially uniform density and strength from standard sheets of uncured polyimide foam. Furthermore, the same method can be used to prepare shaped polyimide foam structures having discrete areas of higher density and, optionally, reduced thickness.

According to the present invention, therefore, there is provided a method of shaping polyimide foam sheets, which comprises

(a) placing an uncured polyimide foam sheet into a two part mould adapted to provide the desired shape,

(b) closing the mould and heating at least one of the moulding surfaces so that the contiguous surface of the foam sheet is heated to a temperature of from 220 to 320°C, and

(c) opening the mould and removing the shaped foam sheet,

the temperature and time of heating in step (b) being such that in the shaped sheet the heated surface is provided with a higher density, moisture impervious, fire blocking and abrasion resistant skin.

Any suitable foam sheet can be used in the method according to the invention. Typical foams include, for example, those described in the patents and patent applications mentioned above. The term "polyimide" is used herein to refer to modified polyimides and polyimide-amides, as well as polyimides as such.

For a better understanding of the invention, reference will be made in the following description to the accompanying drawings, in which:

Figure 1 is a sequential block diagram showing the steps of the method according to the invention;

Figure 2 is a schematic sectional view showing the position of a foam sheet in an open half-round mould; and

Figure 3 is a schematic sectional view showing the closed mould during the curing or re-shaping step.

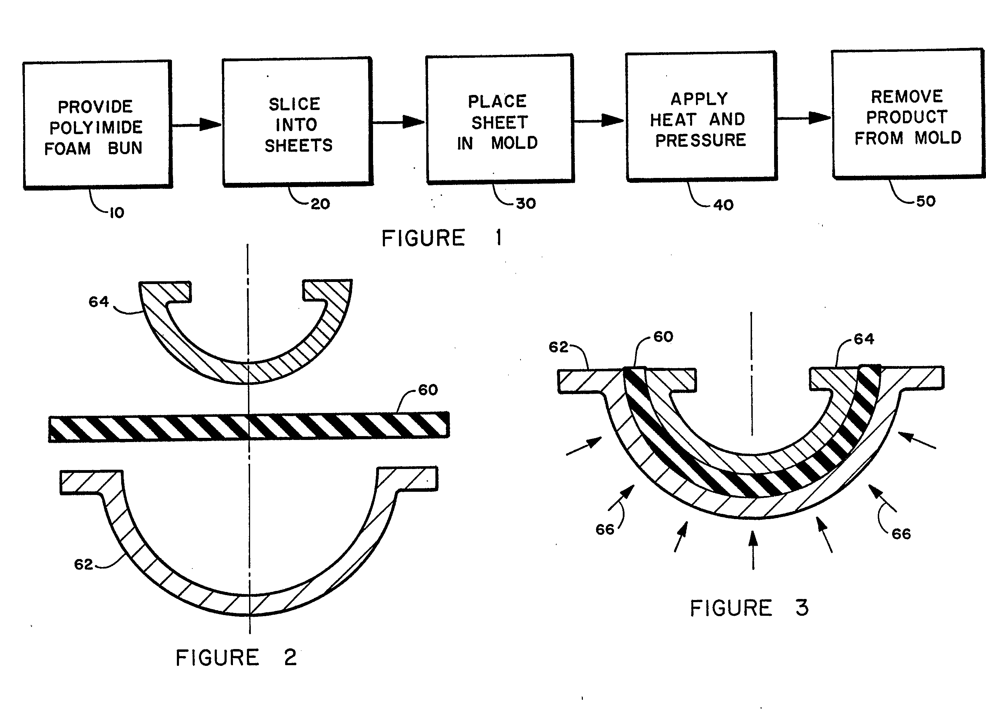

Figure 1 is a block diagram showing a typical sequence of steps for the method of the invention. The first step of the method, represented by block 10, is to form a block of the polyimide foam. Any suitable polyimide foam made by any suitable method can be used. The polyimide foams produced by the methods described in the patents mentioned above have outstanding properties of flexibility, resistance to flame and high temperatures, and do not produce significant amounts of toxic gases when exposed to a naked flame.

The second step of the method (block 20) is slicing the foam bun into uniform slices or sheets of the desired thickness. Any conventional method of slicing can be used. As indicated earlier, the foam can also be foamed directly into sheets or "thin buns" of the desired thickness so that no slicing is required. However, because these directly formed sheets tend to be irregular in thickness, have surface skins, and have somewhat irregular densities near their outer surfaces, slicing from larger blocks is generally preferred.

The foam sheet is then placed in a mould (block 30) adapted to provide the desired shape. Any suitable moulding apparatus can be used. Typical moulds are those in which the foam sheet is placed on a platen or in a female mould half and another platen or a male mould half is then placed in position with the foam sheet compressed between the platens or mould halves.

After the mould has been closed, pressure may be applied to compress the foam sheet to any desired thickness. Heat is then applied to the mould to cure the foam and set the sheet in the desired shape. The foam can be compressed in the mould to any desired extent over a broad range of up to 99% of the original thickness. The foam can be uniformly compressed or different areas within the moulded structure can be compressed to different degrees. In general, greater compression results in a stiffer, stronger product, while reduced compression gives a softer, more flexible product.

As indicated earlier, the process of the invention can be used to prepare structures having localised areas of higher density and strength. For example, compression of a foam sheet having discrete areas of greater thickness produces a structure having areas of higher density and strength corresponding to the original areas of greater thickness. The spacing between the moulding surfaces can also be varied to give structures having thicker or thinner areas; the local density and strength of the resulting structure will vary accordingly.

Any suitable mould release agent or mould surface finish can be used to ensure satisfactory separation of the finished product from the mould.

The foam is heated (block 40) at a temperature of from $220^{\circ}$ to $320^{\circ}C$ for sufficient time to produce the desired degree of curing for the particular foam being used. For most polyimide foam sheet materials, it has been found that the best results are obtained when the foam is heated for a period of from 0.5 to 5.0 minutes; the optimum temperature for curing will vary with the specific polyimide foam being used.

The mould can be heated by any suitable means in order to cure the polyimide. Typical mould heating methods include, for example, thermal conduction, microwave heating, induction heating, or a combination of these methods. One or both halves of the mould may be heated. When both halves are heated, the same or different temperatures may be applied to each half. The surface(s) of the foam sheet which is in contact with the heated mould wall(s) forms a tough higher density, moisture impervious, fire blocking and abrasion resistant skin which is desirable for many product applications. Heating of only one mould half gives a product having a skin on one side and an essentially cellular structure on the other.

After the foam has been cured, the mould is cooled to a suitable temperature and the finished product is removed (block 50). The product is a tough, flexible foam structure which retains its moulded shape after removal from the mould.

According to a preferred embodiment, the method of the invention is used for preparing shaped polyimide panels for insulating pipes and ducts. The preparation of a typical half-pipe insulating channel according to this embodiment is shown schematically in Figures 2 and 3. Figure 2 is a sectional view of a foam sheet 60 placed adjacent to the opening in a female mould member 62. The sheet 60 is then pressed into mould 62 by male mould member 64 until the position shown in Figure 3 is achieved. When the mould is fully closed, sheet 60 is uniformly compressed between the mould halves 62 and 64. Since the polyimide foam sheet 60 is flexible and elastic, it fits into the mould without any wrinkling or folding. Heat is then applied to the mould to cure the foam and set the sheet in its moulded shape. For example, radiant heat can be applied to the external surface of member 62, as indicated by the arrows 66. Since the heat is applied to only the one surface of sheet 60, a skin forms on that surface only. When the foam has been heated at the required temperature for the necessary length of time to achieve satisfactory curing, the male mould member 64 is removed and the shaped foam sheet 60 is taken out of the mould. The foam sheet is permanently shaped into a self-supporting half-pipe channel structure with a smooth, moisture-impervious skin on that surface which is to be outermost in use.

Additives to improve various characteristics of the final foam structure can be added to the foamable material before the foam block is made. Any appropriate additives can be used, such as reinforcing agents, fillers, surfactants to improve foam uniformity, ultraviolet absorbers, colourants or the like. Suitable surfactants include, for example, Zonyl FSC from duPont, BRIJ 78, a polyoxyethylene ether, from ICI America, Dow Corning 190 silicone surfacant, and L550 from Union Carbide. Suitable fillers and reinforcements include, for example, Kevlar aramide fibres, graphite fibres, glass fibres, Teflon/fluorocarbon powders, and mixtures of two or more thereof.

In order that the invention may be more fully understood, the following Examples are given by way of illustration.

Example 1

A foam block having a substantially square cross-section was prepared by the method described in Example I of European Patent Application 85302657.3. A foam sheet having a thickness of about 2.54cm was sliced from the block using a horizontal band knife. The foam had a density of about 0.6 lb/ft$^3$. The polyimide foam sheet was placed in a press with one flat platen preheated to about 60°C and the other to about 315°C. Four spacers, each about 1.27cm thick, were placed at the corners of the first platen. The platens were moved together until they came into contact with the spacers, at a pressure of about 10 psig. After about 1 minute the platens were separated and the foam sheet was removed. The foam sheet had taken a permanent set; it had a density of about 1.4 lb/ft$^3$ and had a toughened skin having a thickness of about 1.5mm on the side which had been in contact with the hotter platen. The sheet was still flexible but retained its moulded shape when lifted by one edge.

Example 2

The procedure of Example 1 was repeated, except that both platens were heated to about 315°C. The moulded product had a density of about 1.6 lb/ft$^3$ and had toughened skins on both sides.

Example 3

The procedure of Example 1 was repeated, with the hotter mould side at the following temperatures: (a) 200°C, (b) 250°C, (c) 350°C, (d) 400°C, and (e) 500°C. The shaped foam sheets produced in these examples had the following characteristics: (a) low density, flexible, toughened skin; (b) low density, semi-rigid skin; (c) high density, rigid skin; and (d) high density, very hard skin.

Example 4

The procedure of Example 1 was repeated, using a half-pipe mould of the type shown in Figures 2 and 3 instead of the flat platens used in Example 1. The mould was heated so that the lower (female) half was at a temperature of 250°C and the upper (male) half at a temperature of 150°C. The mould was closed and the foam sheet compressed to about 75% of its original thickness. The sheet was removed from the mould after about 3 minutes. The foam sheet had taken a permanent set and had the shape of a half-pipe section. The outer surface of the sheet had a toughened skin and the inner surface was still cellular.

Example 5

The procedure of Example 4 was repeated with the only change being the degree of compression of the foam sheet in the mould. The various degrees of compression were as follows (as a percentage of the original sheet thickness): (a) essentially no compression, i.e. 100%, (b) 90%, (c) 70%, (d) 50%, and (e) 30%. The foam half-pipes produced had the same characteristics as the foam of Example 4, but the density increased as the compression rate was increased.

Example 6

The procedure of Example 4 was repeated, except that the original foam sheet used had areas which were about 40% thicker than the remainder of the sheet. When compressed in the mould the half-pipe had a uniform thickness. The areas which were originally thicker had higher density and strength.

Example 7

The procedure of Example 4 was repeated, except that the inner surface of the female mould had several small raised areas which decreased the thickness of the original foam sheet by an additional 20%. The final foam half-pipe had thin areas corresponding to the raised mould areas. These thin areas had higher density and stiffness.

Example 8

The procedure of Example 1 was repeated, except that the foam bun was produced by the following methods: (a) the method of Example I of European Patent Application 85303940.2, (b) the method of Example I of U.S. Patent 4407980, (c) the method of Example I of U.S. Patent 4394464, (d) the method of the second test of U.S. Patent 4476254, (e) the method of Example IV(a) of European Patent Application 85302657.3, (f) the method of Example II of U.S. Patent 4315076, (g) the method of Example I of U.S. Patent 4361453, and (h) the method of Example I of U.S. Patent 3554939. In each case an excellent product having a toughened skin on the "hotter" side was obtained.

Example 9

The procedure according to Example 1 was repeated, but the following additives were mixed with the foamable material prior to drying: (a) about 1% by weight of BRIG 78 surfactant, a polyoxyethylene ether from ICI America, (b) about 5% by weight of chopped graphite fibres, (c) about 10% by weight of chopped glass fibres, and (d) about 1.5% by weight of Zonyl FSC from E.I. duPont de Nemours & Co. The surfactants appear to produce a more uniform foam, while the fibre reinforcements improve the strength of the final product.

Claims:

1.      A method of shaping polyimide foam sheets, which comprises

        (a) placing an uncured polyimide foam sheet into a two part mould adapted to provide the desired shape,

        (b) closing the mould and heating at least one of the moulding surfaces so that the contiguous surface of the foam sheet is heated to a temperature of from 220 to 320°C, and

        (c) opening the mould and removing the shaped foam sheet,

        the temperature and time of heating in step (b) being such that in the shaped sheet the heated surface is provided with a higher density, moisture impervious, fire blocking and abrasion resistant skin.

2.      A method according to claim 1, in which both moulding surfaces are heated so that a higher density skin is formed on both surfaces of the shaped foamed sheet.

3.      A method according to claim 1 or 2, in which the initial foam sheet has discrete areas of greater thickness and the moulding surfaces are spaced, with the mould closed, a substantially uniform distance apart whereby the shaped foam product has substantially uniform thickness with areas of higher density corresponding to the thicker initial foam sheet areas.

4.      A method according to claim 1 or 2, in which the initial foam sheet has a substantially uniform thickness and the mould, when closed, provides at least one area in which the mould surfaces are more closely spaced than in the rest of the mould, whereby the shaped foam product has a thinner, higher density area corresponding to the more closely spaced area of the mould.

5.      A method according to any of claims 1 to 4, in which the initial foam sheet is obtained by reacting a tetracarboxylic acid dianhydride with a lactam in a solvent, adding a diamine, drying the resulting solution to a powder, heating the powder in a mould to cause the powder to foam and produce a foam bun, and slicing the bun into sheets of the desired thickness.

6.      A method according to claim 5, in which the dianhydride is reacted with the lactam in a mole ratio of less than 1:1.5 and the amount of diamine added is substantially stoichiometric with the monomer obtained from the dianhydride/lactam reaction.

PROVIDE POLYIMIDE FOAM BUN — 10 → SLICE INTO SHEETS — 20 → PLACE SHEET IN MOLD — 30 → APPLY HEAT AND PRESSURE — 40 → REMOVE PRODUCT FROM MOLD — 50

FIGURE 1

FIGURE 2

FIGURE 3